# FASCICULE DE BREVET EUROPEEN

(11) **EP 4 476 058 B1**
(45) Date de publication et mention de la délivrance du brevet: **19.11.2025**
(21) Numéro de dépôt: 23707135.2
(22) Date de dépôt: 06.02.2023
(51) Int. Cl.: B32B 3/04, B32B 17/10, B32B 27/36

(54) **VITRAGE AÉRONAUTIQUE DONT LA TOTALITÉ DE LA SURFACE EST COUVERTE PAR UN FILM MINCE TENACE ENCAPSULÉ DANS UNE COUCHE ADHÉSIVE INTERCALAIRE**
AERONAUTISCHE VERGLASUNG, BEI DER DIE GESAMTE OBERFLÄCHE VON EINEM STARKEN DÜNNEN FILM BEDECKT IST, DER IN EINER KLEBEEINSATZSCHICHT VERKAPSELT IST
AERONAUTICAL GLAZING IN WHICH THE WHOLE OF THE SURFACE IS COVERED BY A STRONG THIN FILM ENCAPSULATED IN AN ADHESIVE INSERT LAYER

(30) Priorité: 10.02.2022 FR 2201164
(43) Date de publication de la demande: 18.12.2024
(73) Titulaire: Saint-Gobain Sully, 45600 Sully-sur-Loire (FR)
(72) Inventeur: DUFFOUR, Adrien, 45600 SULLY SUR LOIRE (FR); ROUBY, Michel, 45600 SULLY SUR LOIRE (FR)
(74) Mandataire: Saint-Gobain Recherche
(86) Numéro de dépôt international: PCT/FR2023/050153
(87) Numéro de publication internationale: WO 2023/152438

(56) Documents cités:
- EP-A1- 0 459 704
- WO-A1-2018/142078
- WO-A1-2021/099741
- FR-A1- 3 074 721

## Description

La présente invention a trait à des vitrages aéronautiques légers, tels que pour hélicoptère mais aussi avion d'affaire (en anglais « business jet ») à cabine pressurisée, pour lesquels deux fonctions importantes sont requises : la résistance au choc à l'oiseau (connue en anglais sous les termes « bird strike »), et l'absence de déchaussement du vitrage de sa baie de montage, en cas de bris de la feuille de verre structurale (fonction connue en anglais sous les termes « fail safe »).

Ce type de vitrage léger est constitué habituellement d'une feuille de verre extérieure (en contact avec l'atmosphère extérieure) collée à une feuille intérieure (en contact avec le volume intérieur de la structure de montage) de matériau polymère transparent tenace, par l'intermédiaire d'une couche adhésive intercalaire. La feuille de verre est en verre minéral du type flotté, sodocalcique, aluminosilicate, borosilicate, éventuellement renforcé chimiquement, trempé thermiquement ou durci. La feuille de matériau polymère est par exemple en polyester revêtu (en anglais « Coated Polyester » - CPE), tel que polyester (PET) à revêtement anti-rayure de type polysiloxane sur sa face libre exposée au volume intérieur de la structure de montage. La couche adhésive intercalaire est de préférence en polyuréthane thermoplastique (TPU), mais aussi polyvinylbutyral (PVB), copolymère éthylène - acétate de vinyle (EVA), résine de coulée, ou résine ionomère. Un exemple de ce type de vitrage est représenté par la demande WO 2012 085433 A1.

Un éventuel impact d'oiseau se produit en premier lieu contre la feuille de verre extérieure, mais la fonction « bird strike » est assurée par la feuille intérieure de matériau polymère, appelée aussi « film anti-éclat » et fréquemment désignée en anglais par les termes « spall shield » : cette feuille polymère arrière ne se déchire pas et empoche l'oiseau.

La fonction « fail safe » (anti-déchaussement du vitrage) est obtenue par liaison du vitrage à la structure de montage, réalisée soit par un insert composite dans la périphérie de la couche adhésive intercalaire, insert composite en débord par rapport à l'un au moins des constituants du vitrage feuilleté, soit par un débord de la couche adhésive intercalaire par rapport à l'un au moins des constituants du vitrage feuilleté. Dans le premier cas, le débord de l'insert composite est collé entre un cadre extérieur et un cadre intérieur fixés à la structure; les deux cadres peuvent être boulonnés à la structure à travers des trous ménagés dans le débord de l'insert composite et dans les deux cadres. Dans le second cas, le débord de la couche adhésive intercalaire est collé, et pincé entre un cadre extérieur et un cadre intérieur boulonnés à la structure, à travers des trous ménagés dans le débord de la couche adhésive et dans les deux cadres.

La masse du type de vitrages concernés est optimisable, tout en maintenant, voire en améliorant les propriétés mécaniques recherchées. Secondairement, la feuille intérieure de matériau polymère est peu, ou pas aisément fonctionnalisable, et fragile. Les inventeurs se sont attachés à diminuer la masse des vitrages légers à fonction « bird strike » et « fail safe », sans dégrader ces fonctionnalités.

FR 3 074 721 A1 divulgue un vitrage feuilleté aéronautique, caractérisé en ce qu'il comprend une feuille de matériau polymère structurale intérieure et une feuille de verre structurale extérieure ayant une contrainte à rupture de 350 à 1000 MPa aux caractéristiques de sollicitation d'un choc oiseau.

Cet objectif a été atteint par l'invention qui, en conséquence, a pour objet un vitrage feuilleté constitué d'une première feuille transparente en verre minéral d'épaisseur comprise entre 0,5 et 6 mm ou en matériau polymère d'épaisseur comprise entre 1,2 et 8 mm, destinée, en position de montage du vitrage, à être orientée vers l'atmosphère extérieure, et collée à une seconde feuille transparente en verre minéral d'épaisseur comprise entre 0,5 et 1,2 mm ou en matériau polymère d'épaisseur comprise entre 0,1 et 0,5 mm, destinée à être orientée, en position de montage du vitrage, vers le volume intérieur de la structure de montage, au moyen d'une couche adhésive intercalaire transparente d'épaisseur comprise entre 0,4 et 5 mm, caractérisé en ce qu'un film mince tenace en matériau polymère transparent, d'épaisseur comprise entre 0,05 et 0,5 mm est inséré au sein de la couche adhésive intercalaire sur toute la surface du vitrage feuilleté.

Toute feuille transparente du vitrage feuilleté est plane ou bombée.

Un verre minéral désigne un verre tel que flotté, sodocalcique, aluminosilicate, borosilicate, éventuellement trempé thermiquement ou renforcé chimiquement.

Comme matériau polymère transparent, on peut citer un polyester à revêtement anti-rayure (en anglais « Coated Polyester » -CPE-), en particulier un poly(téréphtalate d'éthylène) (PET) à revêtement de type polysiloxane ou équivalent, un poly(méthacrylate de méthyle) (PMMA), un polycarbonate (PC), un polyuréthane (PU) et équivalents.

Une couche adhésive intercalaire désigne ici un polyvinylbutyral (PVB), un polyuréthane thermoplastique (TPU), un copolymère éthylène - acétate de vinyle (EVA), une résine de coulée, une résine ionomère et équivalents. Par le fait que le film mince tenace est inséré au sein de la couche adhésive intercalaire, l'invention n'exclue pas qu'il puisse être pris en sandwich entre deux couches adhésives intercalaires de natures différentes, par exemple entre une couche de PVB et une de TPU. Chacune des deux couches adhésives intercalaires prenant en sandwich le film mince tenace peut être porteuse de fonctions : antisolaire, pare-soleil, acoustique notamment par une constitution feuilletée.

Au sens de l'invention, le film mince tenace est résistant à la déchirure et une fissure ne s'y propage que difficilement ; un exemple en est un film de poly(téréphtalate d'éthylène) (PET) de 0,2 mm d'épaisseur environ.

Le film mince tenace renforce la liaison mécanique entre la structure de montage et la partie transparente du vitrage. Il permet d'obtenir la résistance au choc à l'oiseau et au déchaussement du vitrage de sa baie de montage, en cas de bris des première et seconde feuilles transparentes, tout en supprimant l'insert composite périphérique et/ou en réduisant l'épaisseur d'un composant verrier ou organique. Il en résulte un gain de coût de fabrication, et une diminution toujours bienvenue de la masse du vitrage feuilleté. Le film mince tenace peut être porteur d'une fonction telle que de contrôle thermique ( antisolaire ou bas émissive), ou teinté totalement ou partiellement (pare-soleil).

L'invention permet également de remplacer la feuille transparente intérieure (« bird strike ») en matériau polymère par une feuille mince en verre minéral, ou autre élément transparent procurant une meilleure résistance mécanique (résistance à l'abrasion, entretien courant), et plus aisément fonctionnalisable (vernis anti-rayure, couches chauffantes, etc.).

Les fonctionnalités recherchées par l'invention sont déjà obtenues avec un film mince tenace ne débordant pas des première et seconde feuilles transparentes. Cependant, selon une configuration préférée du vitrage feuilleté de l'invention, dans la position de montage de celui-ci, la surface libre de la première feuille transparente est collée à sa périphérie à un cadre extérieur au moyen de colle et la surface libre de la seconde feuille transparente est collée à sa périphérie à un cadre intérieur au moyen de colle, et le film mince tenace s'étend au-delà du bord de l'une au moins de la première et la seconde feuilles transparentes de sorte à s'étendre jusqu'aux bords du cadre extérieur et du cadre intérieur. Cette disposition accroît l'aptitude du système de fixation à maintenir le vitrage dans sa baie en cas de casse d'une feuille transparente (« fail safe ») voire de toutes les feuilles transparentes (« full fail safe »), c'est-à-dire à garantir que le vitrage ne se déchausse pas.

Selon une première réalisation de cette configuration préférée, la seconde feuille transparente est en débord par rapport à la première, de sorte à s'étendre, en position de montage du vitrage feuilleté, jusqu'aux bords du cadre extérieur et du cadre intérieur.

Selon une deuxième réalisation de cette configuration préférée, en position de montage du vitrage feuilleté, le cadre extérieur et le cadre intérieur sont boulonnés à la structure de montage par l'intermédiaire d'une douille traversant le film mince tenace, de sorte que le vitrage est pincé par l'exercice d'une pression par le cadre extérieur sur la première feuille transparente (par l'intermédiaire de colle) d'une part, par le cadre intérieur sur la seconde feuille transparente (également par l'intermédiaire de colle) d'autre part. Cette disposition accroît le degré d'obtention de la fonction « fail safe », « full fail safe ».

De préférence, le film mince tenace est en poly(téréphtalate d'éthylène) (PET) d'épaisseur comprise entre 0,1 et 0,4, de préférence entre 0,12 et 0,3 et de manière particulièrement préférée 0,15 et 0,25 mm.

De préférence, la face de la première feuille transparente interne à la structure feuilletée porte une couche électroconductrice chauffante métallique ou en oxyde transparent conducteur (en anglais « Transparent Conductive Oxide » -TCO-). Des exemples en sont une couche métallique d'argent, d'or, ou d'oxyde d'indium dopé à l'étain (en anglais Indium Tin Oxide - ITO -), ou d'oxyde d'étain dopé au fluor (SnO₂ : F). Une couche chauffante disposée dans l'épaisseur de la structure feuilletée à une telle proximité de la surface extérieure du vitrage a essentiellement une fonction anti-givre.

Selon une réalisation avantageuse du vitrage feuilleté de l'invention, la seconde feuille transparente est en verre minéral et porte un(e) ou plusieurs couche(s)/empilement(s) fonctionnel(le)(s). Une telle feuille intérieure en verre minéral présente une résistance à la rayure supérieure à celle du polyester à revêtement anti-rayure. Contrairement à cette dernière, il est aisé d'y déposer une ou plusieurs couche(s) mince(s) en empilement(s) fonctionnel(le)(s), chaque couche de quelques nanomètres d'épaisseur, telle que réalisée par pulvérisation cathodique assistée par champ magnétique (magnétron).

La face interne à la structure feuilletée de la seconde feuille transparente porte alors de préférence un empilement de contrôle thermique antisolaire ou bas-émissif, et sa face exposée au volume intérieur de la structure de montage porte une couche antibuée. Un empilement antisolaire réfléchit le rayonnement solaire en permettant d'éviter que la température à l'intérieur du volume délimité n'augmente trop, et/ou de diminuer dans une certaine mesure l'éblouissement du pilote - conducteur - utilisateur - passager- occupant. Un empilement bas-émissif réfléchit le rayonnement infrarouge correspondant à la chaleur du volume intérieur délimité par le vitrage, de manière à garder une partie accrue de cette chaleur à l'intérieur. Un revêtement antibuée consiste notamment en une couche hydrophile empêchant l'eau de condensation de se former sous forme de gouttelettes, cette eau se déposant sous forme d'un film homogène ne gênant pas la vision à travers, ledit revêtement étant parfaitement transparent, ne dégradant pas la qualité optique du vitrage. Il s'agit d'une couche d'oxyde minéral tel que silice, dioxyde de titane, ou polymère du type polyuréthane, polyvinylpyrrolidone, poly(alcool vinylique), formée par voie liquide, sol-gel, ou équivalent.

De préférence, la seconde feuille transparente est en verre minéral renforcé chimique, notamment aluminosilicate ou sodocalcique.

Selon une variante intéressante, un insert composite est positionné au sein d'une partie périphérique de la couche adhésive intercalaire, face à une partie périphérique de la première feuille transparente (c'est-à-dire en vis-à-vis de cette partie de la première feuille) et en s'étendant jusqu'aux bords du cadre extérieur et du cadre intérieur.

Un autre objet de l'invention consiste en l'utilisation d'un vitrage feuilleté décrit précédemment dans l'aéronautique, comme vitrage d'avion de tourisme, d'affaire (en anglais « business jet ») du type Falcon F10 de la Société Dassault Aviation ou d'hélicoptère.

L'invention sera mieux comprise à la lumière de la description suivante des dessins en annexe qui sont des représentations schématiques en coupe dans lesquelles
[Fig. 1] et [Fig. 2] représentent deux réalisations de vitrages de l'état de la technique ;
[Fig. 3] et [Fig. 4] sont des vues de deux variantes de vitrages feuilletés selon l'invention.

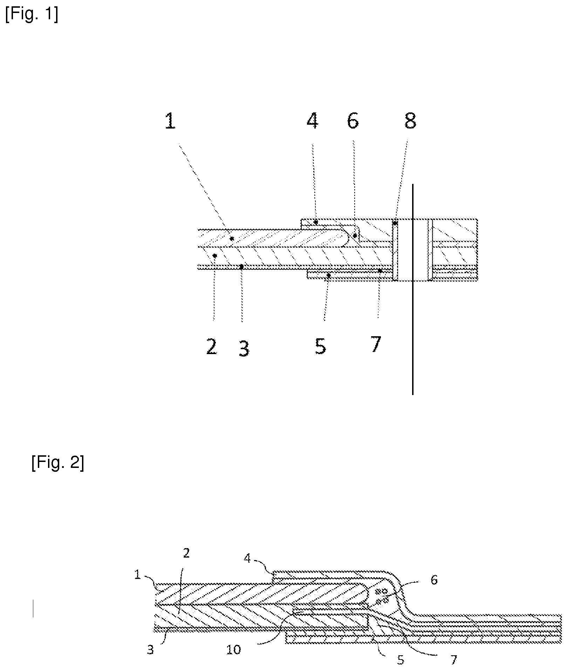

En référence à la Figure 1, un vitrage feuilleté est constitué d'une feuille de verre aluminosilicate 1 renforcé chimique de 3 mm d'épaisseur collée à une feuille 3 de PET à revêtement anti-rayure de 0,18 mm d'épaisseur par l'intermédiaire d'une couche intercalaire 2 de TPU de 3,8 mm d'épaisseur. La feuille 3 de PET et la couche adhésive 2 sont en débord par rapport à la feuille de verre 1. Un cadre extérieur 4 est collé à une partie périphérique de la surface libre de la feuille de verre 1 et de la couche adhésive 2 par de la colle 6 ; un cadre intérieur 5 est collé à une partie périphérique de la surface libre de la feuille 3 de PET par de la colle 7. Une douille 8 est insérée dans des trous ménagés à travers le cadre extérieur 4, la colle 6, la couche de TPU 2, la colle 7 et le cadre intérieur 5. Cet ensemble est boulonné par l'intermédiaire de la douille 8 sur la structure de montage non représentée, de sorte que le vitrage feuilleté est pincé avec exercice d'une pression par le cadre extérieur 4 sur la feuille de verre 1 par l'intermédiaire de la colle 6, respectivement par le cadre intérieur 5 sur la feuille de PET revêtu 3 par l'intermédiaire de la colle 7.

Les bords de tous les constituants du vitrage feuilleté de la Figure 2 sont, au contraire, tous sensiblement alignés. Un insert composite 10 est encapsulé dans une bande périphérique de la couche adhésive 2 de TPU, se prolonge entre la colle 6 et la colle 7 jusqu'aux bords du cadre extérieur 4 et du cadre intérieur 5. De manière facultative et non représentée, on peut également employer ici une douille telle que représentée à la Figure 1, douille qui traverserait ici le cadre extérieur 4, la colle 6, l'insert composite 10, la colle 7 et le cadre intérieur 5, dans le but d'accueillir le boulonnage de l'ensemble à la structure de montage.

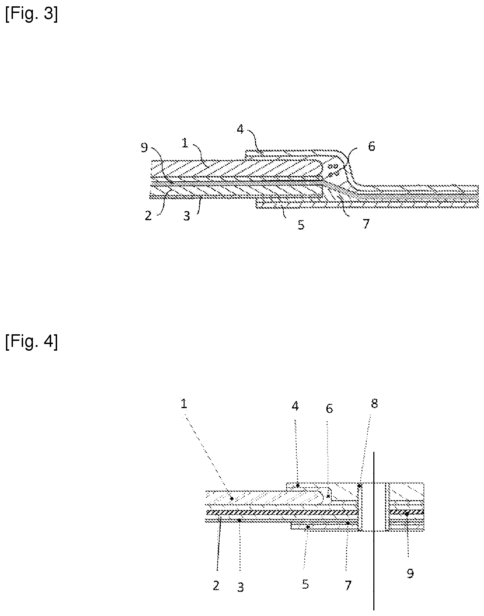

Le vitrage feuilleté conforme à l'invention représenté à la Figure 3 diffère de celui de la Figure 2 par la suppression de l'insert composite 10, et son remplacement par un film mince tenace 9 de PET de 0,18 mm d'épaisseur qui, en plus de la surface couverte par l'insert composite 10, couvre la totalité de la surface du vitrage feuilleté. Un boulonnage de l'ensemble facultatif et non représenté est possible de même que décrit relativement à la Figure 2. La suppression de l'insert composite 10 simplifie la fabrication du vitrage. Par rapport à l'emploi de cet insert composite 10, l'emploi du film 9 procure les fonctions de « bird strike » et « fail safe », tout en permettant d'amincir la feuille de verre 1, la couche intercalaire 2, et la feuille de PET revêtu 3, et finalement d'alléger le vitrage. Même en employant les mêmes nature et épaisseur de feuille de verre 1 et de feuille de PET revêtu 3 qu'aux Figures 1 et 2, le seul remplacement de la couche adhésive intercalaire 2 de celles-ci par une feuille de PET de 0,18 mm d'épaisseur (constituant le film mince tenace 9) prise en sandwich entre deux couches 2 de TPU de 1,25 mm d'épaisseur permet de diminuer la masse surfacique du vitrage de 10 %, tout en améliorant ses propriétés mécaniques recherchées.

Le vitrage de la Figure 4 diffère de celui de la Figure 1 par l'encapsulation, au sein de la couche de TPU 2, du même film de PET 9 qu'à la Figure 3, également couvrant toute la surface du vitrage. Par rapport au vitrage de la Figure 1, celui de la Figure 4 peut mettre en œuvre des épaisseurs inférieures de la feuille de verre 1, de la couche adhésive 2 et de la feuille de PET revêtu 3.

## Revendications

1. Vitrage feuilleté constitué d'une première feuille transparente (1) en verre minéral d'épaisseur comprise entre 0,5 et 6 mm ou en matériau polymère d'épaisseur comprise entre 1,2 et 8 mm, destinée, en position de montage du vitrage, à être orientée vers l'atmosphère extérieure, et collée à une seconde feuille transparente (3) en verre minéral d'épaisseur comprise entre 0,5 et 1,2 mm ou en matériau polymère d'épaisseur comprise entre 0,1 et 0,5 mm, destinée à être orientée, en position de montage du vitrage, vers le volume intérieur de la structure de montage, au moyen d'une couche adhésive intercalaire (2) transparente d'épaisseur comprise entre 0,4 et 5 mm, **caractérisé en ce qu'**un film mince tenace (9) en matériau polymère transparent, d'épaisseur comprise entre 0,05 et 0,5 mm est inséré au sein de la couche adhésive intercalaire (2) sur toute la surface du vitrage feuilleté.

2. Vitrage feuilleté selon la revendication 1, **caractérisé en ce que** dans la position de montage de celui-ci, la surface libre de la première feuille transparente (1) est collée à sa périphérie à un cadre extérieur (4) au moyen de colle (6) et la surface libre de la seconde feuille transparente (3) est collée à sa périphérie à un cadre intérieur (5) au moyen de colle (7), et le film mince tenace (9) s'étend au-delà du bord de l'une au moins de la première et la seconde feuilles transparentes (1, 3) de sorte à s'étendre jusqu'aux bords du cadre extérieur (4) et du cadre intérieur (5).

3. Vitrage feuilleté selon la revendication 2, **caractérisé en ce que** la seconde feuille transparente (3) est en débord par rapport à la première (1), de sorte à s'étendre, en position de montage du vitrage feuilleté, jusqu'aux bords du cadre extérieur (4) et du cadre intérieur (5).

4. Vitrage feuilleté selon la revendication 2, **caractérisé en ce qu'**en position de montage de celui-ci, le cadre extérieur (4) et le cadre intérieur (5) sont boulonnés à la structure de montage par l'intermédiaire d'une douille (8) traversant le film mince tenace (9), de sorte que le vitrage est pincé par l'exercice d'une pression par le cadre extérieur (4) sur la première feuille transparente (1) d'une part, par le cadre intérieur (5) sur la seconde feuille transparente (3) d'autre part.

5. Vitrage feuilleté selon l'une des revendications précédentes, **caractérisé en ce que** le film mince tenace (9) est en poly(téréphtalate d'éthylène) (PET) d'épaisseur comprise entre 0,1 et 0,4, de préférence entre 0,12 et 0,3 et de manière particulièrement préférée 0,15 et 0,25 mm.

6. Vitrage feuilleté selon l'une des revendications précédentes, **caractérisé en ce que** la face de la première feuille transparente (1) interne à la structure feuilletée porte une couche électroconductrice chauffante métallique ou en oxyde transparent conducteur.

7. Vitrage feuilleté selon l'une des revendications précédentes, **caractérisé en ce que** la seconde feuille transparente (3) est en verre minéral et porte un(e) ou plusieurs couche(s)/empilement(s) fonctionnel(le)(s).

8. Vitrage feuilleté selon la revendication 7, **caractérisé en ce que** la face interne à la structure feuilletée de la seconde feuille transparente (3) porte un empilement de contrôle thermique antisolaire ou bas-émissif, et sa face exposée au volume intérieur de la structure de montage porte une couche antibuée.

9. Vitrage feuilleté selon l'une des revendications précédentes, **caractérisé en ce que** la seconde feuille transparente (3) est en verre minéral renforcé chimique.

10. Vitrage feuilleté selon l'une des revendications 2 à 9, **caractérisé en ce qu'**un insert composite (10) est positionné au sein d'une partie périphérique de la couche adhésive intercalaire (2), face à une partie périphérique de la première feuille transparente (1) et en s'étendant jusqu'aux bords du cadre extérieur (4) et du cadre intérieur (5).

11. Utilisation d'un vitrage feuilleté selon l'une des revendications précédentes dans l'aéronautique, comme vitrage d'avion d'affaire ou d'hélicoptère.

## Patentansprüche

1. Verbundverglasung, bestehend aus einer ersten transparenten Scheibe (1) aus Mineralglas mit einer Dicke zwischen 0,5 und 6 mm oder aus Polymermaterial mit einer Dicke zwischen 1,2 und 8 mm, die dazu bestimmt ist, in einer Montageposition der Verglasung zu der Außenatmosphäre ausgerichtet zu sein, und die mittels einer transparenten Zwischenlagenklebeschicht (2) mit einer Dicke zwischen 0,4 und 5 mm mit einer zweiten transparenten Scheibe (3) aus Mineralglas mit einer Dicke zwischen 0,5 und 1,2 mm oder aus Polymermaterial mit einer Dicke zwischen 0,1 und 0,5 mm verklebt ist, die dazu bestimmt ist, in der Montageposition der Verglasung zu dem Innenvolumen der Montagestruktur ausgerichtet zu sein, **dadurch gekennzeichnet, dass** eine zähe Dünnfolie (9) aus transparentem Polymermaterial mit einer Dicke zwischen 0,05 und 0,5 mm innerhalb der Zwischenlagenklebeschicht (2) über die gesamte Oberfläche der Verbundverglasung eingefügt ist.

2. Verbundverglasung nach Anspruch 1, **dadurch gekennzeichnet, dass** in der Montageposition davon die freie Oberfläche der ersten transparenten Scheibe (1) an ihrem Rand mittels Klebstoff (6) an einen Außenrahmen (4) geklebt ist und die freie Oberfläche der zweiten transparenten Scheibe (3) an ihrem Rand mittels Klebstoff (7) an einen Innenrahmen (5) geklebt ist und sich die zähe Dünnfolie (9) über die Kante mindestens einer der ersten und der zweiten transparenten Scheibe (1, 3) hinaus erstreckt, um sich bis zu den Kanten des Außenrahmens (4) und des Innenrahmens (5) zu erstrecken.

3. Verbundverglasung nach Anspruch 2, **dadurch gekennzeichnet, dass** die zweite transparente Scheibe (3) die erste (1) so überragt, dass sie sich in der Montageposition der Verbundverglasung bis zu den Kanten des Außenrahmens (4) und des Innenrahmens (5) erstreckt.

4. Verbundverglasung nach Anspruch 2, **dadurch gekennzeichnet, dass** in der Montageposition davon der Außenrahmen (4) und der Innenrahmen (5) mittels einer Hülse (8), die durch die zähe Dünnfolie (9) führt, mit der Montagekonstruktion verschraubt sind, sodass die Verglasung durch die Ausübung eines Drucks durch den Außenrahmen (4) auf die erste transparente Scheibe (1) einerseits, durch den Innenrahmen (5) auf die zweite transparente Scheibe (3) andererseits eingeklemmt wird.

5. Verbundverglasung nach einem der vorstehenden Ansprüche,
**dadurch gekennzeichnet, dass** die zähe Dünnfolie (9) aus Poly(ethylenterephthalat) (PET) mit einer Dicke zwischen 0,1 und 0,4, vorzugsweise zwischen 0,12 und 0,3 und besonders bevorzugt 0,15 und 0,25 mm ist.

6. Verbundverglasung nach einem der vorstehenden Ansprüche,
**dadurch gekennzeichnet, dass** die Fläche der ersten transparenten Scheibe (1) im Inneren der laminierten Struktur eine elektrisch leitfähige Heizschicht trägt, die metallisch oder aus transparentem leitfähigem Oxid ist.

7. Verbundverglasung nach einem der vorstehenden Ansprüche,
**dadurch gekennzeichnet, dass** die zweite transparente Scheibe (3) aus Mineralglas ist und eine(n) oder mehrere Funktionsschicht(en)/-stapel trägt.

8. Verbundverglasung nach Anspruch 7, **dadurch gekennzeichnet, dass** die Fläche im Inneren der laminierten Struktur der zweiten transparenten Scheibe (3) einen Wärmeregelungsstapel mit Sonnenschutz oder geringer Emissivität trägt und ihre Fläche, die dem Innenvolumen der Montagestruktur zugewandt ist, eine Antibeschlagschicht trägt.

9. Verbundverglasung nach einem der vorstehenden Ansprüche,
**dadurch gekennzeichnet, dass** die zweite transparente Scheibe (3) aus chemisch verstärktem Mineralglas ist.

10. Verbundverglasung nach einem der Ansprüche 2 bis 9,
**dadurch gekennzeichnet, dass** ein Verbundeinsatz (10) innerhalb eines Randbereichs der Zwischenlagenklebeschicht (2) positioniert ist, einem Randbereich der ersten transparenten Scheibe (1) zugewandt ist und sich bis zu den Kanten des Außenrahmens (4) und des Innenrahmens (5) erstreckt.

11. Verwendung einer Verbundverglasung nach einem der vorstehenden Ansprüche in der Luftfahrt, als Verglasung für ein Geschäftsluftfahrzeug oder einen Hubschrauber.

## Claims

1. A laminated glazing consisting of a first transparent sheet (1) of mineral glass with a thickness of between 0.5 and 6 mm or of polymer material with a thickness of between 1.2 and 8 mm, intended, in the glazing mounting position, to be oriented towards the external atmosphere, and bonded to a second transparent sheet (3) of mineral glass with a thickness of between 0.5 and 1.2 mm or of polymer material with a thickness of between 0.1 and 0.5 mm, intended to be oriented, in the glazing mounting position, towards the interior volume of the mounting structure, by means of a transparent adhesive insert layer (2) with a thickness of between 0.4 and 5 mm, **characterized in that** a strong thin film (9) of transparent polymer material with a thickness of between 0.05 and 0.5 mm is inserted within the adhesive insert layer (2) over the whole surface of the laminated glazing.

2. The laminated glazing according to claim 1, **characterized in that** in the mounting position thereof, the free surface of the first transparent sheet (1) is bonded at its periphery to an outer frame (4) by means of adhesive (6) and the free surface of the second transparent sheet (3) is bonded at its periphery to an inner frame (5) by means of adhesive (7), and the strong thin film (9) extends beyond the edge of at least one of the first and second transparent sheets (1, 3) so as to extend to the edges of the outer frame (4) and the inner frame (5).

3. The laminated glazing according to claim 2, **characterized in that** the second transparent sheet (3) overhangs the first (1) so as to extend, in the mounting position of the laminated glazing, up to the edges of the outer frame (4) and the inner frame (5).

4. The laminated glazing according to claim 2, **characterized in that** in the mounting position thereof, the outer frame (4) and the inner frame (5) are bolted to the mounting structure by means of a bush (8) passing through the strong thin film (9), so that the glazing is clamped by the exertion of pressure by the outer frame (4) on the first transparent sheet (1) on the one hand, and by the inner frame (5) on the second transparent sheet (3) on the other.

5. The laminated glazing according to one of the preceding claims, **characterized in that** the strong thin film (9) is made of polyethylene terephthalate (PET) with a thickness of between 0.1 and 0.4, preferably between 0.12 and 0.3 and particularly preferably 0.15 and 0.25 mm.

6. The laminated glazing according to one of the preceding claims, **characterized in that** the face of the first transparent sheet (1) facing the laminated structure bears an electrically conductive heating layer of metal or transparent conductive oxide.

7. The laminated glazing according to one of the preceding claims, **characterized in that** the second transparent sheet (3) is made from mineral glass and carries one or more functional layer(s)/stack(s).

8. The laminated glazing according to claim 7, **characterized in that** the face of the second transparent sheet (3) facing the laminated structure carries a sun protection or low emissivity thermal control stack, and its face facing the interior volume of the mounting structure carries an anti-fog coating.

9. The laminated glazing according to one of the preceding claims, **characterized in that** the second transparent sheet (3) is made from chemically strengthened mineral glass.

10. The laminated glazing according to one of claims 2 to 9, **characterized in that** a composite insert (10) is positioned within a peripheral portion of the adhesive insert layer (2), facing a peripheral portion of the first transparent sheet (1) and extending to the edges of the outer frame (4) and the inner frame (5).

11. A use of a laminated glazing according to one of the preceding claims in aeronautics, as a business jet or helicopter glazing.
